# EUROPEAN PATENT SPECIFICATION

(11) **EP 1 767 086 B1**
(45) Date of publication and mention of the grant of the patent: **14.03.2018**
(21) Application number: 06121048.0
(22) Date of filing: 21.09.2006
(51) Int. Cl.: A01G 1/04

(54) **Method of transporting mushroom compost**
Verfahren zum Transportieren von Pilzzuchtkompost
Procédé pour transporter du compost de champignons

(30) Priority: 21.09.2005 NL 1029998
(43) Date of publication of application: 28.03.2007
(73) Proprietor: Dutch Trading Office B.V., 5753 PE Deurne (NL)
(72) Inventor: Welten, Johannes Henricus Martinus, 5753 PE Deurne (NL); Van Ooijen, Franciscus Petrus Marinus Wilhelmus, 5751 EA Deurne (NL)
(74) Representative: Van Breda, Jacobus

(56) References cited:
- EP-A1- 0 331 346
- EP-A1- 0 666 022
- WO-A-91/18498
- WO-A-92/09192
- GB-A- 2 360 923

## Description

The invention relates to a method of transporting mushroom compost.

Such methods are known in the art.

Mushroom compost is usually transported in bulk, in other words, not packaged.

The drawback of the known methods is that in order to maintain its quality, the mushroom compost can only be transported over a very limited distance and for a very limited length of time.

EP-A-1 0 331 346 discloses a mushroom culture, whereas GB-A- 2 360 923 relates to a method of growing mushrooms.

It is the object of the invention to provide a method of transporting mushroom compost, allowing the mushroom compost to be transported for an extended length of time and consequently over greater distances, while maintaining the quality.

In order to achieve the above-mentioned objective, the method according to the present invention is characterised by the features of claim 1. The compost blocks to be used in the method according to the present invention are formed from the loose mushroom compost, in a manner that is not new in itself.

Using the method according to the invention achieves that the mushroom compost can tolerate a significantly longer transport time than is the case with known methods.

Mushroom mycelium grows on a variety of substrate materials (for example, plant material or manure). Composting makes mushroom mycelium-specific nutrients available in the substrate. In this way the substrate becomes "selective" with regard to the growth of mushrooms. Normally, compost is transported in bulk. During transport in this conventional manner the structure and/or selectivity of the compost changes with time, usually after only 24 hours, as a result of (de)composting and/or overheating. By forming the compost prior to transport into blocks and subsequently storing the formed blocks in a conditioned space, leaving room between the blocks for ventilation, the method according to the present invention makes it possible to control the moisture content, the germination and the temperature of the substrate such that the quality of the compost is maintained, allowing the transport to take longer and consequently making it possible to cover a greater distance.

A further advantage of the method according to the invention is that the compost can be handled much more easily. One can imagine that the compost blocks formed according to the method of the invention are much easier to handle than loose compost.

In the context of the present invention 'conditioned space' means any (loading) space in which the temperature, the carbon dioxide (CO₂) content and/or the humidity can be controlled. Examples of conditioned spaces include, among others, refrigerated lorries, refrigerated containers for transport over land/water, but also other storage spaces, such as a storehouse.

When applying the method according to the invention it is important to leave room between the compost blocks for ventilation. Ventilation promotes heat dissipation and also ensures that CO₂, which develops during composting, can be vented in order to avoid " suffocation" of the mycelium.

The growth of the Mushroom mycelium is determined by the temperature of the compost. A drawback of the traditional bulk transport of mushroom compost is that after some time, the compost overheats due to the heat that develops during the growth of the mycelium, and the activity of thermophylic microorganisms. The temperature may rise to more than 70 °C.

In a preferred embodiment of the method according to the invention, the conditioned space is cooled. More preferably, the temperature of the conditioned space is -10 to +17 °C. Such a temperature can easily be achieved in a conventional refrigerated container with a ventilated loading floor.

In this way the temperature in the compost blocks will not rise above 20 °C.

Furthermore, Mushroom mycelium does not grow optimally if the moisture content of the compost is too high or too low. In a preferred embodiment of the invention the moisture content of the compost blocks is 40-85%.

With bulk transport of quantities of compost the moisture in the compost will after some time migrate from top to bottom. The diminished moisture content in the top layer and the increased moisture content in the bottom layers of a quantity of compost may lead to a reduced growth of the mycelium.

In a preferred embodiment, the method according to the invention is characterised in that the compost blocks are packaged in a waterproof wrapping, for example, a plastic film.

This achieves that the moisture content in the individual compost blocks remains constant. At the same time, it prevents moisture from leaking onto the ventilated loading floor of a traditional refrigerated container and blocking the ventilation.

The compost blocks used in the method according to the invention comprise maximally 1000 kg compost. However, it is preferred according to the invention for the compost blocks to comprise less than 22 kg compost per block.

This promotes heat exchange and prevents overheating of the compost.

The dimensions and shapes of the blocks may be varied. The method according to the present invention is further characterised in that the stacked compost blocks are supported by a spacer. Said spacer is preferably comprised of wooden poles.

By using said spacer, wooden poles being particularly effective and inexpensive, the compost blocks can simply be stacked such that room for ventilation is left between the blocks, while at the same time the blocks are prevented from collapsing, which could hinder the ventilation in the conditioned space.

The manner in which the blocks may be stacked, optionally employing a spacer, may be adapted to the dimensions of the conditioned space and other requirements. However, it is important to avoid that there is too much contact between blocks and/or that they collapse, because this could hinder the ventilation. Often the floor of a conditioned space is ventilated and is this ventilation essential for conditioning the space. It is in such a case preferable to also leave room between the bottom blocks and the ventilated loading floor.

The present invention will hereinafter be further elucidated by way of a non-limiting exemplary embodiment and the appended drawing.

### EXEMPLARY EMBODIMENT

Compost blocks were produced by pressing compost into a mould and subsequently applying a plastic film. The compost blocks weighed between 20 and 23 kg. The dimensions of a compost block (1 x b x h) were 60 x 40 x 20 cm.

The weight of a compost block depends on the applied packing pressure. The packaging material used in the present example is plastic. However, it is also possible to use perforated plastic. The sides of the compost blocks were left half open to allow adequate CO₂ exchange.

Standard refrigerated container, or "referee" (40 feet, or 40').

The dimensions of a standard refrigerated container are (1 x b x h =) 11.5 m x 2.3 m x 2.6 m.

In the example, 1080 compost blocks were loaded into such a container. The total filling weight amounted to between 21.6 and 24.8 tons of compost, depending on the applied packing pressure or moulding pressure.

Lengthways, 18 blocks were placed in the container, thus 18 x 0.6 m =10.8 m. The remaining room for placing wooden poles and for ventilation was (11.5 m - 10.8 m =) 0.7 m. Over the total length of the container therefore approximately 4 cm ventilation space was provided between each of the 18 blocks of compost.

Over the breadth of the container, 5 blocks were placed (5 x 0.4 m = 2 m). The room remaining for wooden poles was (2.3 m - 2 m=) 0.3 m. The room for ventilation between the five blocks of compost therefore amounted to approximately 7.5 cm (30 cm/4 = 7.5 cm).

In the vertical direction of the container 12 blocks were stacked (12 x 0.2 m = 2.4 m). The room left over for ventilation between the container ceiling and the last layer of compost was (2.6 m - 2.4 m =) 0.2 m.

Wooden poles (diameter 4 cm) were sawn to a length of 2.62 m. The extra 2 cm is intended for a clamping support. The poles were subsequently pushed at a slant between the floor and the ceiling, thereby putting a compressive stress on the poles. This compressive stress prevents the compost blocks from collapsing.

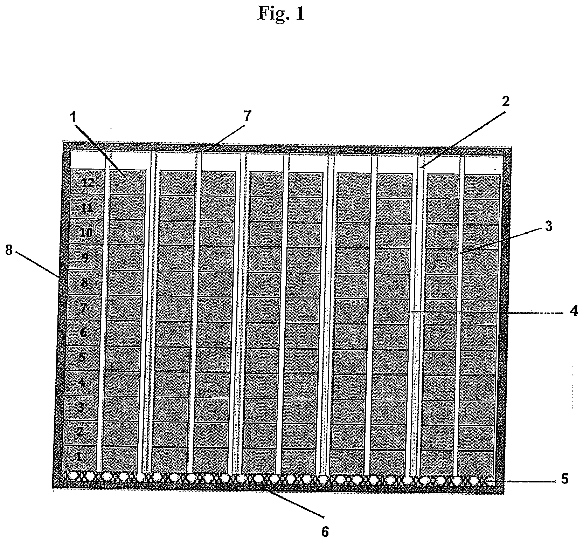

Breadthways first one compost block was placed against the inside wall of the container and then the stack was made up to a total of 12. This was carried out both at the left side and at the right side of the container. Subsequently a pole was placed against the compost blocks over the breadth and over the length. This results in columns 1 and 5 (see Figure 1).

Subsequently, another two stacks of 12 compost blocks were placed against the wooden poles both at the left and the right (against columns 1 and 5). This results in columns 2 and 4. Subsequently, another wooden clamping pole was provided at the free side as well as at the front of the compost stack. Between the two wooden poles of column 2 and column 4 a last column (no. 3) of compost was stacked 12 blocks high, which at its front side was also provided with a clamping pole. In this way the first row of a total of 18 rows is created, all of which are freestanding and allowing ventilation.

In the example, the ventilation of the container was set at 20% (75 m³ of fresh air per hour) and the temperature was set at 6 °C. However, these setting may vary and depend on the dimensions of the compost blocks, the dimensions of the wooden poles, the distance between the columns and rows of compost blocks and the total filling weight of the container.

The ventilation pressure in combination with the temperature of 6 °C and the space of 7.5 cm by 4.5 cm between each column and row of compost blocks (of 12 compost blocks high) provided such a degree of ventilation and refrigeration that the compost blocks (total filling weight between 21 and 24 tons) were able to tolerate longer transport times (minimally 6 weeks).

### FIGURES

Figure 1 shows a front view of a standard refrigerated container, in which compost blocks are transported according to the method of the present invention.

Reference numeral 1 in Figure 1 refers to compost blocks, 2 to wooden poles between the compost blocks, 3 to wooden poles positioned in front of the compost blocks, 4 to the room left over for ventilation, 5 represents a ventilated floor 6, 7 refers to the ceiling of the container and 8 to the side wall of the container.

Figure 1 thus schematically illustrates the transport of compost blocks in a container according to the method of the invention, wherein the compost blocks are stacked so as to leave room for ventilation (see also the above example) .

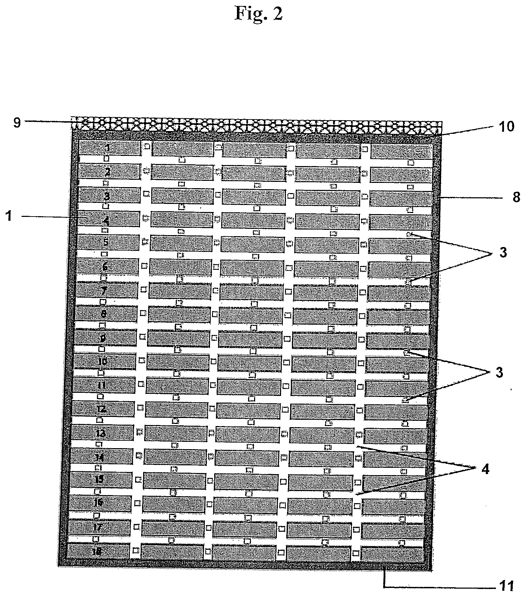

Figure 2 is a top view of a container loaded with compost blocks, wherein 9 represents an air conditioning system, 10 the rear wall of the container, and 11 the doors at the front of the container. The other reference numerals have the same meaning as the corresponding numerals in Figure 1.

## Claims

1. A method of bulk transporting mushroom compost,
**characterised in** providing blocks of mushroom compost,
wherein the blocks have a weight of less than 1000 kg,
wherein compost blocks are stacked and are supported by a spacer/spacers,
wherein rows and columns of stacked blocks are provided,
wherein the blocks are stored in a conditioned space, leaving vertical room between the stacked blocks for ventilation, adapted to control temperature, carbon dioxide content and/or humidity,
wherein the conditioned space is a refrigerated container or a refrigerated lorry,
ventilating the conditioned space,
and
wherein bulk mushroom compost is transported in the conditioned space over a long distance over land/water.

2. A method according to claim 1, **characterised in that** the conditioned space is cooled, such as to -10 °C to 17 °C.

3. A method according to claim 1 or 2, **characterised in that** the temperature of the compost blocks during transport is 20 - 22 °C.

4. A method according to one of the preceding claims, **characterised in that** the moisture content of the compost blocks is 40-85%.

5. A method according to one of the preceding claims, **characterised in that** the compost blocks are packaged in a waterproof wrapping.

6. A method according to claim 5, wherein the sides of the compost blocks are left half open.

7. A method according to one of the preceding claims, **characterised in that** the compost blocks comprise less than 22 kg compost per block.

8. A method according to one of the preceding claims,-wherein a room is left for ventilation between a ceiling of the lorry or container and the upper layer of compost.

9. A method according to claim 8, **characterised in that** said spacer(s) is/are comprised of wooden poles.

10. A method according to one of the preceding claims, providing room between bottom blocks and a ventilated loading floor.

11. A method according to one of the preceding claims, wherein compost blocks are pressed into a mould before transportation.

12. Conditioned space selected from a refrigerated lorry and a transport refrigerated container, comprising a bulk quantity of blocks of mushroom compost,
wherein the blocks have a weight of less than 1000 kg,
wherein compost blocks are stacked and are supported by a spacer/spacers,
wherein rows and columns of stacked blocks are provided,
wherein the blocks are stored in said conditioned space, leaving vertical room between the stacked blocks for ventilation, adapted to control temperature, carbon dioxide content and/or humidity, wherein the conditioned space is said lorry or said container, and
wherein blocks of compost are packaged.

## Patentansprüche

1. Eine Methode zum Transportieren von Pilzkompost in großen Mengen,
**dadurch gekennzeichnet, dass** Blöcke von Pilzkompost bereitgestellt werden,
wobei die Blöcke ein Gewicht von weniger als 1000 kg haben,
wobei Kompostblöcke gestapelt sind und durch einen Abstandshalter/Abstandhalters gestützt werden,
wobei Reihen und Spalten von gestapelten Blöcken vorgesehen sind,
wobei die Blöcke in einem konditionierten Raum gelagert werden, wobei ein vertikaler Raum zwischen den gestapelten Blöcken zur Belüftung verbleibt, der angepasst ist, um die Temperatur, den Kohlendioxidgehalt und/oder die Feuchtigkeit zu steuern,
wobei der klimatisierte Raum ein Kühlcontainer oder ein Kühllastwagen ist,
das lüften den klimatisierten Raum,
und
wobei Massenpilzkompost in dem konditionierten Raum über eine lange Distanz über Land/Wasser transportiert wird.

2. Verfahren nach Anspruch 1, **dadurch gekennzeichnet, dass** der konditionierte Raum gekühlt wird, beispielsweise auf -10 °C bis 17 °C.

3. Verfahren nach Anspruch 1 oder 2, **dadurch gekennzeichnet, dass** die Temperatur der Kompostblöcke während des Transports 20 - 22 °C beträgt.

4. Verfahren nach einem der vorhergehenden Ansprüche, **dadurch gekennzeichnet, dass** der Feuchtigkeitsgehalt der Kompostblöcke 40-85% beträgt.

5. Verfahren nach einem der vorhergehenden Ansprüche, **dadurch gekennzeichnet, dass** die Kompostblöcke in einer wasserdichten Umhüllung verpackt sind.

6. Verfahren nach Anspruch 5, wobei die Seiten der Kompostblöcke halb offen gelassen werden.

7. Verfahren nach einem der vorhergehenden Ansprüche, **dadurch gekennzeichnet, dass** die Kompostblöcke weniger als 22 kg Kompost pro Block umfassen.

8. Verfahren nach einem der vorhergehenden Ansprüche, wobei ein Raum zur Belüftung zwischen einer Decke des Lastkraftwagens oder Containers und der oberen Kompostschicht verbleibt.

9. Verfahren nach Anspruch 8, **dadurch gekennzeichnet, dass** der oder die Abstandhalter aus Holzpfählen bestehen.

10. Verfahren nach einem der vorhergehenden Ansprüche, das Raum zwischen Bodenblöcken und einem belüfteten Ladeboden vorsieht.

11. Verfahren nach einem der vorhergehenden Ansprüche, wobei Kompostblöcke vor dem Transport in eine Form gepresst werden.

12. Konditionierter Raum, ausgewählt aus einem Kühllastwagen und einem Kühlcontainer, umfassend eine große Menge von Blöcken von Pilzkompost,
wobei die Blöcke ein Gewicht von weniger als 1000 kg haben,
wobei Kompostblöcke gestapelt sind und durch einen Abstandshalter/Abstandhalters gestützt werden,
wobei Reihen und Spalten von gestapelten Blöcken vorgesehen sind,
wobei die Blöcke in einem konditionierten Raum gelagert werden, wobei ein vertikaler Raum zwischen den gestapelten Blöcken zur Belüftung verbleibt, der angepasst ist um Temperatur, Kohlendioxidgehalt und/oder Feuchtigkeit zu steuern, wobei der klimatisierte Raum der Lastwagen oder der Container ist, und
wobei Blöcke von Kompost verpackt werden.

## Revendications

1. Une méthode de transport en vrac de compost de champignons,
**caractérisé en ce qu'**il provenant des blocs de compost de champignons,
dans lequel les blocs ont un poids inférieur à 1000 kg,
dans lequel les blocs de compost sont empilés et sont supportés par une entretoise/entretoises,
dans lequel des rangées et des colonnes de blocs empilés sont prévues,
dans lequel les blocs sont stockés dans un espace conditionné, laissant une pièce verticale entre les blocs empilés pour la ventilation, adaptée pour contrôler la température, la teneur en dioxyde de carbone et/ou l'humidité,
dans lequel l'espace conditionné est un conteneur réfrigéré ou un camion réfrigéré,
ventiler l'espace conditionné,
et
dans lequel le compost de champignons en vrac est transporté dans l'espace conditionné sur une longue distance sur la terre/l'eau.

2. Procédé selon la revendication 1, **caractérisé en ce que** l'espace conditionné est refroidi, par exemple de -10 °C à 17 °C.

3. Procédé selon la revendication 1 ou 2, **caractérisé en ce que** la température des blocs de compost lors du transport est de 20 à 22 °C.

4. Procédé selon l'une des revendications précédentes, **caractérisé en ce que** la teneur en humidité des blocs de compost est de 40-85%.

5. Procédé selon l'une des revendications précédentes, **caractérisé en ce que** les blocs de compost sont emballés dans un emballage étanche.

6. Procédé selon la revendication 5, dans lequel les côtés des blocs de compost sont laissés à moitié ouverts.

7. Procédé selon l'une des revendications précédentes, **caractérisé en ce que** les blocs de compost comprennent moins de 22 kg de compost par bloc.

8. Procédé selon l'une des revendications précédentes, dans lequel on laisse une pièce pour la ventilation entre un plafond du camion ou conteneur et la couche supérieure de compost.

9. Procédé selon la revendication 8, **caractérisé en ce que** ladite ou lesdites entretoises sont composées de pôles en bois.

10. Procédé selon l'une des revendications précédentes, ménageant de la place entre des blocs inférieurs et un plancher de chargement ventilé.

11. Procédé selon l'une des revendications précédentes, dans lequel des blocs de compost sont pressés dans un moule avant transport.

12. L'espace conditionné choisi parmi un camion réfrigéré et un conteneur réfrigéré, comprenant une quantité en vrac de blocs de compost de champignons,
dans lequel les blocs ont un poids inférieur à 1000 kg,
dans lequel les blocs de compost sont empilés et sont supportés par une entretoise/entretoises,
dans lequel des rangées et des colonnes de blocs empilés sont prévues,
dans lequel les blocs sont stockés dans un espace conditionné, laissant une chambre verticale entre les blocs empilés pour la ventilation, adaptée pour contrôler la température, la teneur en dioxyde de carbone et/ou l'humidité, dans lequel l'espace conditionné est ledit camion ou ledit conteneur, et
dans lequel des blocs de compost sont emballés.
